# EUROPEAN PATENT APPLICATION

(11) **EP 4 718 352 A1**
(43) Date of publication of application: **01.04.2026**
(21) Application number: 25196494.6
(22) Date of filing: 18.08.2025
(51) Int. Cl.: G06Q 10/0631, G06Q 30/015, G06Q 30/0201

(54) **MATCHING METHOD, INFORMATION PROCESSING DEVICE, AND NON-TRANSITORY STORAGE MEDIUM**

(30) Priority: 27.09.2024 JP 2024169190
(71) Applicant: TOYOTA JIDOSHA KABUSHIKI KAISHA, Toyota-shi, Aichi-ken 471-8571 (JP)
(72) Inventor: SUZUKI, Takuma, Toyota-shi, 471-8571 (JP); ISHINO, Yuma, Toyota-shi, 471-8571 (JP); MORISHITA, Hirofumi, Toyota-shi, 471-8571 (JP)
(74) Representative: D Young & Co LLP

(57) **Abstract**

A matching method is executed by an information processing device (10), and includes: acquiring (S20) personal information about a customer; acquiring (S30) characteristic information about staff members; determining (S40) compatibility between the customer and each staff member, based on the personal information and the characteristic information; and deciding (S50) a staff member that deals with the customer, based on a determination result.

## Description

### BACKGROUND OF THE INVENTION

### 1. Field of the Invention

The present disclosure relates to a matching method, an information processing device, and a non-transitory storage medium.

### 2. Description of Related Art

Conventionally, a technology of analyzing the content of a business talk is known. For example, Japanese Unexamined Patent Application Publication No. 2019-28910 (JP 2019-28910 A) discloses a dialogue analysis system for checking that a sales person explains matters that should be explained and does not say matters that must not be said in a business talk with a customer.

### SUMMARY OF THE INVENTION

In the business talk, the matching of the compatibility between a customer and a sales staff member greatly influences the success of the business talk. In a matching technology, machine learning or the like can be used. JP 2019-28910 A discloses no technique for the matching. Thus, there is room for improvement in the matching technology for the business talk.

The present disclosure improves the matching technology for the business talk.

A matching method according to an embodiment of the present disclosure is executed by an information processing device, and includes: acquiring personal information about a customer; acquiring characteristic information about staff members; determining compatibility between the customer and each staff member, based on the personal information and the characteristic information; and deciding a staff member that deals with the customer, based on a determination result.

An information processing device according to another embodiment of the present disclosure includes a control unit configured to: acquire personal information about a customer; acquire characteristic information about staff members; determine compatibility between the customer and each staff member, based on the personal information and the characteristic information; and decide a staff member that deals with the customer, based on a determination result.

A program according to another embodiment of the present disclosure causes a computer to execute: acquiring personal information about a customer; acquiring characteristic information about staff members; determining compatibility between the customer and each staff member, based on the personal information and the characteristic information; and deciding a staff member that deals with the customer, based on a determination result.

A non-transitory storage medium according to another embodiment of the present disclosure stores instructions that are executable by one or more processors and that cause the one or more processors to perform functions including: acquiring personal information about a customer; acquiring characteristic information about staff members; determining compatibility between the customer and each staff member, based on the personal information and the characteristic information; and deciding a staff member that deals with the customer, based on a determination result.

The personal information may include information about at least one of a family structure, hobby, purchase intention, use purpose, living environment, and life event of the customer.

The personal information may include questionnaire answer information that is sent by the customer when the customer makes a business-talk appointment.

The personal information may include information that is obtained from business-talk recorded data.

The characteristic information may include analysis information about business-talk recorded data.

The characteristic information may include at least one of a score relevant to a past contract, product knowledge, and self-analysis information.

With the embodiment of the present disclosure, the matching technology for the business talk is improved.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram showing a schematic configuration of a system according to an embodiment; and
FIG. 2 is a flowchart showing the operation of an information processing device.

### DETAILED DESCRIPTION OF EMBODIMENTS

Embodiments of the present disclosure will be described below.

### Outline of Embodiment

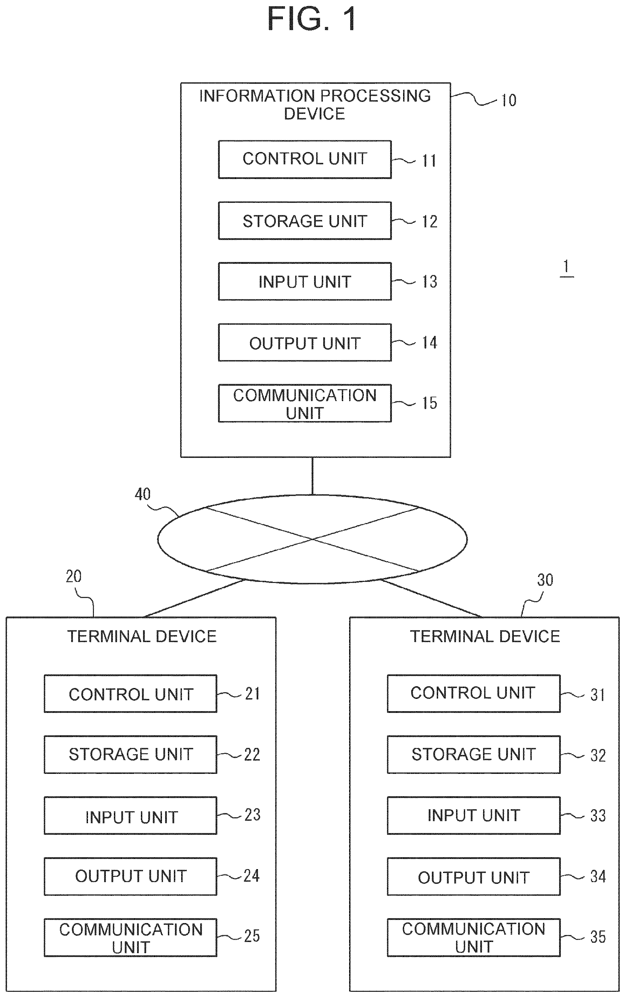

The outline and configuration of a system 1 according to an embodiment will be described with reference to FIG. 1. The system 1 according to the embodiment includes an information processing device 10, a terminal device 20, and a terminal device 30. The information processing device 10, the terminal device 20, and the terminal device 30 are connected so as to be capable of communicating with a network 40 including a mobile communication network and the internet, for example.

For example, the information processing device 10 is a server device that is installed in a datacenter or the like. For example, the information processing device 10 is a server that belongs to a cloud computing system or other computing systems. FIG. 1 shows an example in which the number of information processing devices 10 included in the system 1 is one, but the present disclosure is not limited to this. The system 1 may include two or more information processing devices 10.

The terminal device 20 is an arbitrary device that is used by a customer in a business talk. For example, general-purpose electronic equipment such as a smartphone, a tablet terminal, and a wearable terminal, or dedicated electronic equipment can be employed as the terminal device 20. FIG. 1 shows an example in which the number of terminal devices 20 included in the system 1 is one, but the present disclosure is not limited to this. The system 1 may include two or more terminal devices 20.

The terminal device 30 is an arbitrary device that is used by a manager for staff members in the business talk. For example, general-purpose electronic equipment such as a smartphone, a tablet terminal, and a wearable terminal, or dedicated electronic equipment can be employed as the terminal device 30. FIG. 1 shows an example in which the number of terminal devices 30 included in the system 1 is one, but the present disclosure is not limited to this. The system 1 may include two or more terminal devices 30.

First, the outline of a matching technology for the business talk according to the embodiment will be described. Details will be described later. In the embodiment, the business talk is a business talk about vehicle sale, for example, but is not limited to this. For example, the business talk may include meetings for various kinds of contract conclusions such as the trade of a real estate, the contract of an insurance product, and the sale of a financial product. The information processing device 10 acquires personal information about the customer. Furthermore, the information processing device 10 acquires characteristic information about staff members. The information processing device 10 determines compatibility between the customer and each staff member, based on the personal information and the characteristic information. The information processing device 10 decides a staff member that deals with the customer, based on a determination result.

In this way, in the embodiment, the compatibility between the customer and each staff member is determined based on the personal information about the customer and the characteristic information, and the staff member that deals with the customer is decided based on the determination result. Since the staff member that deals with the customer in the business talk is decided based on the determination result about the compatibility between the customer and each staff member, the matching technology for the business talk is improved.

Next, the configurations of the information processing device 10, the terminal device 20, and the terminal device 30 will be described in detail.

### Configuration of Information Processing Device 10

As shown in FIG. 1, the information processing device 10 includes a control unit 11, a storage unit 12, an input unit 13, an output unit 14, and a communication unit 15.

The control unit 11 includes at least one processor, at least one dedicated circuit, or a combination of them. The processor is a general-purpose processor such as a central processing unit (CPU) or a graphics processing unit (GPU), or a dedicated processor for a specific process. For example, the dedicated circuit is a field-programmable gate array (FPGA) or an application specific integrated circuit (ASIC). The control unit 11 executes processes related to the operation of the information processing device 10, while controlling parts of the information processing device 10.

The storage unit 12 includes at least one semiconductor memory, at least one magnetic memory, at least one optical memory, or a combination of at least two kinds of them. For example, the semiconductor memory is a random access memory (RAM) or a read only memory (ROM). For example, the RAM is static random access memory (SRAM) or a dynamic random access memory (DRAM). For example, the ROM is an electrically erasable programmable read only memory (EEPROM). For example, the storage unit 12 functions as a main storage device, an auxiliary storage device, or a caches memory. In the storage unit 12, data that is used for the operation of the information processing device 10 and data that is obtained by the operation of the information processing device 10 are stored.

The input unit 13 includes at least one input interface. For example, the input interface is a physical key, an electrostatic capacitance key, a pointing device, or a touch screen that is provided integrally with a display. Further, for example, the input interface may be a sound sensor that accepts a voice input, or a camera that accepts a gesture input. The input unit 13 accepts a manipulation for inputting the data that is used for the operation of the information processing device 10. The input unit 13 may be connected to the information processing device 10, as external input equipment, instead of being included in the information processing device 10. As the connection scheme, for example, an arbitrary scheme such as Universal Serial Bus (USB), High-Definition Multimedia Interface (HDMI (R)), or Bluetooth (R) can be used.

The output unit 14 includes at least one output interface. For example, the output interface is a display that outputs information by picture, or a speaker that outputs information by voice. For example, the display is a liquid crystal display (LCD) or an organic electroluminescence (organic EL) display. The output unit 14 outputs the data that is obtained by the operation of the information processing device 10. The output unit 14 may be connected to the information processing device 10, as external output equipment, instead of being included in the information processing device 10. As the connection scheme, for example, an arbitrary scheme such as USB, HDMI (R), or Bluetooth (R) can be used.

The communication unit 15 includes at least one exterior communication interface. The communication interface may be an interface for wire communication or may be an interface for wireless communication. In the case of the wire communication, the communication interface is an interface for Local Area Network (LAN) or Universal Serial Bus (USB), for example. In the case of the wireless communication, the communication interface is an interface that complies with a mobile communication standard such as Long Term Evolution (LTE), 4th generation (4G), or 5th generation (5G), or an interface that complies with a short-range wireless communication such as Bluetooth (R), for example. The communication unit 15 receives the data that is used for the operation of the information processing device 10, and sends the data that is obtained by the operation of the information processing device 10.

Functions of the information processing device 10 are realized when a program according to the embodiment is executed by a processor corresponding to the control unit 11. That is, the functions of the information processing device 10 are realized by software. The program causes a computer to execute the operation of the information processing device 10, and thereby, causes the computer to function as the information processing device 10. That is, the computer functions as the information processing device 10, by executing the operation of the information processing device 10 in accordance with the program.

In the embodiment, the program can be recorded in a computer-readable recording medium. The computer-readable recording medium includes a non-transitory computer-readable medium, and for example, is a magnetic recording device, an optical disc, a magneto-optical recording medium, or a semiconductor memory. For example, the distribution of the program is performed by the sale, transfer, or rental of a portable recording medium in which the program is recorded, as exemplified by a digital versatile disc (DVD) or a compact disc read only memory (CD-ROM). Further, the distribution of the program may be performed by storing the program in a storage of an external server and sending the program from the external server to other computers. Further, the program may be provided as a program product.

Some or all of the functions of the information processing device 10 may be realized by a dedicated circuit corresponding to the control unit 11. That is, some or all of the functions of the information processing device 10 may be realized by hardware.

### Configuration of Terminal Device 20

As shown in FIG. 1, the terminal device 20 includes a control unit 21, a storage unit 22, an input unit 23, an output unit 24, and a communication unit 25.

The control unit 21 includes at least one processor, at least one dedicated circuit, or a combination of them. The processor is a general-purpose processor such as a CPU or a GPU, or a dedicated processor for a specific process. For example, the dedicated circuit is a FPGA or an ASIC. The control unit 21 executes processes related to the operation of the terminal device 20, while controlling parts of the terminal device 20.

The storage unit 22 includes at least one semiconductor memory, at least one magnetic memory, at least one optical memory, or a combination of at least two kinds of them. For example, the semiconductor memory is a RAM or a ROM. For example, the RAM is a SRAM or a DRAM. For example, the ROM is an EEPROM. For example, the storage unit 22 functions as a main storage device, an auxiliary storage device, or a caches memory. In the storage unit 22, data that is used for the operation of the terminal device 20 and data that is obtained by the operation of the terminal device 20 are stored.

The input unit 23 includes at least one input interface. For example, the input interface is a physical key, an electrostatic capacitance key, a pointing device, or a touch screen that is provided integrally with a display. Further, for example, the input interface may be a sound sensor that accepts a voice input, or a camera that accepts a gesture input. The input unit 23 accepts a manipulation for inputting the data that is used for the operation of the terminal device 20. The input unit 23 may be connected to the terminal device 20, as external input equipment, instead of being included in the terminal device 20. As the connection scheme, for example, an arbitrary scheme such as USB, HDMI (R), or Bluetooth (R) can be used.

The output unit 24 includes at least one output interface. For example, the output interface is a display that outputs information by picture, or a speaker that outputs information by voice. For example, the display is an LCD or an organic EL display. The output unit 24 outputs the data that is obtained by the operation of the terminal device 20. The output unit 24 may be connected to the terminal device 20, as external output equipment, instead of being included in the terminal device 20. As the connection scheme, for example, an arbitrary scheme such as USB, HDMI (R), or Bluetooth (R) can be used.

The communication unit 25 includes at least one exterior communication interface. The communication interface may be an interface for wire communication or may be an interface for wireless communication. In the case of the wire communication, the communication interface is an interface for LAN or USB, for example. In the case of the wireless communication, the communication interface is an interface that complies with a mobile communication standard such as LTE, 4G, or 5G, or an interface that complies with a short-range wireless communication such as Bluetooth (R), for example. The communication unit 25 receives the data that is used for the operation of the terminal device 20, and sends the data that is obtained by the operation of the terminal device 20.

Functions of the terminal device 20 are realized when a program according to the embodiment is executed by a processor corresponding to the control unit 21. That is, the functions of the terminal device 20 are realized by software. The program causes a computer to execute the operation of the terminal device 20, and thereby, causes the computer to function as the terminal device 20. That is, the computer functions as the terminal device 20, by executing the operation of the terminal device 20 in accordance with the program.

Some or all of the functions of the terminal device 20 may be realized by a dedicated circuit corresponding to the control unit 21. That is, some or all of the functions of the terminal device 20 may be realized by hardware.

### Configuration of Terminal Device 30

As shown in FIG. 1, the terminal device 30 includes a control unit 31, a storage unit 32, an input unit 33, an output unit 34, and a communication unit 35.

The control unit 31 includes at least one processor, at least one dedicated circuit, or a combination of them. The processor is a general-purpose processor such as a CPU or a GPU, or a dedicated processor for a specific process. For example, the dedicated circuit is a FPGA or an ASIC. The control unit 31 executes processes related to the operation of the terminal device 30, while controlling parts of the terminal device 30.

The storage unit 32 includes at least one semiconductor memory, at least one magnetic memory, at least one optical memory, or a combination of at least two kinds of them. For example, the semiconductor memory is a RAM or a ROM. For example, the RAM is a SRAM or a DRAM. For example, the ROM is an EEPROM. For example, the storage unit 32 functions as a main storage device, an auxiliary storage device, or a caches memory. In the storage unit 32, data that is used for the operation of the terminal device 30 and data that is obtained by the operation of the terminal device 30 are stored.

The input unit 33 includes at least one input interface. For example, the input interface is a physical key, an electrostatic capacitance key, a pointing device, or a touch screen that is provided integrally with a display. Further, for example, the input interface may be a sound sensor that accepts a voice input, or a camera that accepts a gesture input. The input unit 33 accepts a manipulation for inputting the data that is used for the operation of the terminal device 30. The input unit 33 may be connected to the terminal device 30, as external input equipment, instead of being included in the terminal device 30. As the connection scheme, for example, an arbitrary scheme such as USB, HDMI (R), or Bluetooth (R) can be used.

The output unit 34 includes at least one output interface. For example, the output interface is a display that outputs information by picture, or a speaker that outputs information by voice. For example, the display is an LCD or an organic EL display. The output unit 34 outputs the data that is obtained by the operation of the terminal device 30. The output unit 34 may be connected to the terminal device 30, as external output equipment, instead of being included in the terminal device 30. As the connection scheme, for example, an arbitrary scheme such as USB, HDMI (R), or Bluetooth (R) can be used.

The communication unit 35 includes at least one exterior communication interface. The communication interface may be an interface for wire communication or may be an interface for wireless communication. In the case of the wire communication, the communication interface is an interface for LAN or USB, for example. In the case of the wireless communication, the communication interface is an interface that complies with a mobile communication standard such as LTE, 4G, or 5G, or an interface that complies with a short-range wireless communication such as Bluetooth (R), for example. The communication unit 35 receives the data that is used for the operation of the terminal device 30, and sends the data that is obtained by the operation of the terminal device 30.

Functions of the terminal device 30 are realized when a program according to the embodiment is executed by a processor corresponding to the control unit 31. That is, the functions of the terminal device 30 are realized by software. The program causes a computer to execute the operation of the terminal device 30, and thereby, causes the computer to function as the terminal device 30. That is, the computer functions as the terminal device 30, by executing the operation of the terminal device 30 in accordance with the program.

Some or all of the functions of the terminal device 30 may be realized by a dedicated circuit corresponding to the control unit 31. That is, some or all of the functions of the terminal device 30 may be realized by hardware.

### Operation of Information Processing Device 10

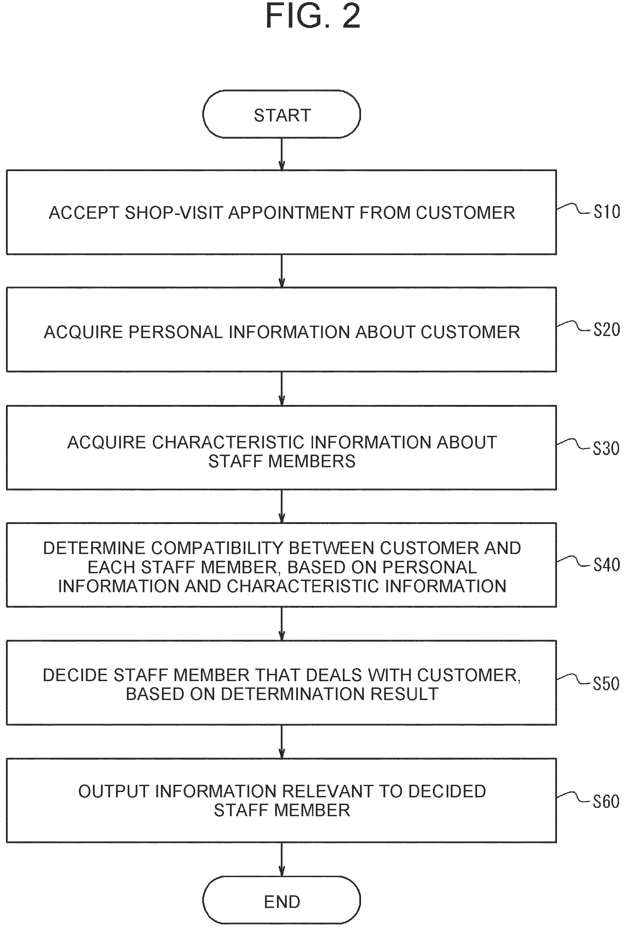

The operation of the information processing device 10 according to the embodiment will be described with reference to FIG. 2.

Step S10: The control unit 11 of the information processing device 10 accepts a shop-visit appointment from the customer.

For the process of accepting the shop-visit appointment, an arbitrary technique can be employed. For example, the control unit 11 may accept the shop-visit appointment from the terminal device 20 that is used by the customer, through the communication unit 15 and the network. For using the system 1 including the information processing device 10 according to the embodiment, for example, an application for the use of the system 1 may be installed in the terminal device 20 of the customer. In this case, the terminal device 20 can access the information processing device 10 through the application. Alternatively, the application may be avoided from being installed in the terminal device 20. In this case, based on a predetermined URL, the terminal device 20 can access a device relevant to the system 1 according to the embodiment, through user's web-browser operation. For example, when the customer uses the system 1 for the first time, user registration may be necessary. The user registration may require the user to register information (also referred to as personal information, hereinafter) relevant to the attribute, personality, and others of the customer. For example, the personal information may include information about at least one of the family structure, hobby, purchase intention, use purpose, living environment, and life event of the customer. The personal information may include information (also referred to as questionnaire answer information, hereinafter) relevant to the answer to a questionnaire. The personal information may include the name, age, and others of the customer. When the personal information is registered, a user ID and a password are issued. The customer can access the system 1 using the issued user ID and password. By accessing the system 1 through the terminal device 20, the customer can designate a desired date and time, and others, and can make the shop-visit appointment for the business talk. The information processing device 10 accepts the shop-visit appointment. For example, the terminal device 20 generates appointment information about the shop visit that includes the desired date and time and others input by the customer, and sends the appointment information to the information processing device 10. The control unit 11 receives the appointment information about the shop visit that is sent from the terminal device 20, through the communication unit 15, and saves the received appointment information in the storage unit 12.

Step S20: The control unit 11 acquires the personal information about the customer.

For the process of acquiring the personal information, an arbitrary technique can be employed. For example, the control unit 11 may acquire the personal information registered at the time of the user registration. When the control unit 11 acquires the personal information, the control unit 11 saves the personal information in the storage unit 12. Alternatively, the control unit 11 may acquire the personal information by causing the terminal device 20 or the like of the customer to send the personal information at the time of making a business-talk appointment such as the shop-visit appointment for the business talk in step S10. That is, the personal information may include the questionnaire answer information and others that are sent from the terminal device 20 or another computer of the customer at the time of making the business-talk appointment. Thereby, it is possible to acquire the latest personal information about the customer at the time point when the business-talk appointment is made. The personal information may be information that is obtained from the past business-talk recorded data about the customer. For example, the information that is obtained from the past business-talk recorded data about the customer may be stored in the storage unit 12. In this case, the control unit 11 may acquire the information from the storage unit 12. When the personal information includes the information that is obtained from the past business-talk recorded data about the customer in addition to the personal information that is directly obtained from the customer through the questionnaire and others, it is possible to know the information relevant to the attribute and personality of the customer in more detail.

Step S30: The control unit 11 acquires the characteristic information about staff members.

For the process of acquiring the characteristic information about staff members, an arbitrary technique can be employed. The characteristic information about staff members is information relevant to characteristics of a plurality of staff members in a shop. The characteristic information about staff members may include analysis information related to the past business-talk recorded data about staff members. That is, the characteristic information about staff members may include analysis information that is obtained by previously analyzing the business-talk recorded data. The data relevant to the characteristic information may be recorded in a database. The database may be stored in the storage unit 12, or may be stored in an external device. Further, the characteristic information about staff members may include at least one of a score relevant to the past contract, product knowledge, and self-analysis information from staff members.

Step S40: The control unit 11 determines the compatibility between the customer and each staff member, based on the personal information and the characteristic information.

For the process of determining the compatibility between the customer and each staff member, an arbitrary technique can be employed. For example, the control unit 11 may determine the compatibility between the customer and each staff member, using a learning model. For example, the control unit 11 may input the personal information and the characteristic information to the learning model, as explanatory variables, and may output a score (also referred to as a compatibility score, hereinafter) relevant to the compatibility between the customer and each staff member, as a determination result, based on the learning model.

The learning model is a model that is created by a machine learning in which a machine learning algorithm is used. For example, the learning model may be a machine learning model that is built by adopting a decision tree as a base. The machine learning model that is built by adopting a decision tree as a base is LightGBM or XGBoost, for example, but is not limited to them. Alternatively, the learning model may be a model that is generated based on a machine learning algorithm for Convolutional Neural Network (CNN), Recurrent Neural Network (RNN), or other deep learnings.

Step S50: The control unit 11 decides the staff member that deals with the customer, based on the determination result.
For example, based on the determination result, from staff members that can cope at a date and time when the customer hopes to visit the shop, the control unit 11 may decide a staff member having the highest compatibility score, as the staff member that deals with the customer.

Step S60: The control unit 11 outputs information relevant to the decided staff member.

For the process of outputting the information relevant to the decided staff member, an arbitrary technique can be employed. For example, the control unit 11 may send the data to the terminal device 30 of the manager, through the communication unit 15, and may output the information relevant to the decided staff member, through the output unit 34 of the terminal device 30. Alternatively, the control unit 11 may display and output the information relevant to the decided staff member, through a user interface of the output unit 14.

As described above, the information processing device 10 according to the embodiment acquires the personal information about the customer. Furthermore, the information processing device 10 acquires the characteristic information about staff members. The information processing device 10 determines the compatibility between the customer and each staff member, based on the personal information and the characteristic information. The information processing device 10 decides the staff member that deals with the customer, based on the determination result.

With this configuration, the compatibility between the customer and each staff member is determined based on the personal information about the customer and the characteristic information, and the staff member that deals with the customer is decided based on the determination result. Since the staff member that deals with the customer in the business talk is decided based on the determination result about the compatibility between the customer and each staff member, the matching technology for the business talk is improved.

The present disclosure has been described based on the drawings and the embodiment. Note that a person skilled in the art may perform various modifications and alterations based on the present disclosure. Accordingly, it is noted that the modifications and the alterations are included in the scope of the present disclosure. For example, functions and the like included in constituent portions, steps and others can be redisposed such that there is no logical inconsistency, and a plurality of constituent portions, steps and others can be combined to one or can be divided.

For example, it is allowable to adopt an embodiment in which the configuration and operation of the information processing device 10 in the above-described embodiment are distributed to a plurality of computers that can communicate with each other.

Some embodiments of the present disclosure will be exemplified below. It is noted that the embodiments of the present disclosure are not limited to them.

### Supplement 1

A matching method that is executed by an information processing device, the matching method comprising:
acquiring personal information about a customer;
acquiring characteristic information about staff members;
determining compatibility between the customer and each staff member, based on the personal information and the characteristic information; and
deciding a staff member that deals with the customer, based on a determination result.

### Supplement 2

The matching method according to supplement 1, wherein the personal information includes information about at least one of a family structure, hobby, purchase intention, use purpose, living environment, and life event of the customer.

### Supplement 3

The matching method according to supplement 1 or 2, wherein the personal information includes questionnaire answer information that is sent by the customer when the customer makes a business-talk appointment.

### Supplement 4

The matching method according to any one of supplements 1 to 3, wherein the personal information includes information that is obtained from business-talk recorded data.

### Supplement 5

The matching method according to any one of supplements 1 to 4, wherein the characteristic information includes analysis information about business-talk recorded data.

### Supplement 6

The matching method according to any one of supplements 1 to 5, wherein the characteristic information includes at least one of a score relevant to a past contract, product knowledge, and self-analysis information.

### Supplement 7

An information processing device comprising a control unit, wherein
the control unit executes
acquiring personal information about a customer,
acquiring characteristic information about staff members,
determining compatibility between the customer and each staff member, based on the personal information and the characteristic information, and
deciding a staff member that deals with the customer, based on a determination result.

### Supplement 8

The information processing device according to supplement 7, wherein the personal information includes information about at least one of a family structure, hobby, purchase intention, use purpose, living environment, and life event of the customer.

### Supplement 9

The information processing device according to supplement 7 or 8, wherein the personal information includes questionnaire answer information that is sent by the customer when the customer makes a business-talk appointment.

### Supplement 10

The information processing device according to any one of supplements 7 to 9, wherein the personal information includes information that is obtained from business-talk recorded data.

### Supplement 11

The information processing device according to any one of supplements 7 to 10, wherein the characteristic information includes analysis information about business-talk recorded data.

### Supplement 12

The information processing device according to any one of supplements 7 to 11, wherein the characteristic information includes at least one of a score relevant to a past contract, product knowledge, and self-analysis information.

### Supplement 13

A program that causes a computer to execute:
acquiring personal information about a customer;
acquiring characteristic information about staff members;
determining compatibility between the customer and each staff member, based on the personal information and the characteristic information; and
deciding a staff member that deals with the customer, based on a determination result.

### Supplement 14

The program according to supplement 13, wherein the personal information includes information about at least one of a family structure, hobby, purchase intention, use purpose, living environment, and life event of the customer.

### Supplement 15

The program according to supplement 13 or 14, wherein the personal information includes questionnaire answer information that is sent by the customer when the customer makes a business-talk appointment.

### Supplement 16

The program according to any one of supplements 13 to 15, wherein the personal information includes information that is obtained from business-talk recorded data.

### Supplement 17

The program according to any one of supplements 13 to 16, wherein the characteristic information includes analysis information about business-talk recorded data.

### Supplement 18

The program according to any one of supplements 13 to 17, wherein the characteristic information includes at least one of a score relevant to a past contract, product knowledge, and self-analysis information.

## Claims

1. A matching method that is executed by an information processing device (10), the matching method comprising:
acquiring (S20) personal information about a customer;
acquiring (S30) characteristic information about staff members;
determining (S40) compatibility between the customer and each staff member, based on the personal information and the characteristic information; and
deciding (S50) a staff member that deals with the customer, based on a determination result.

2. The matching method according to claim 1, wherein the personal information includes information about at least one of a family structure, hobby, purchase intention, use purpose, living environment, and life event of the customer.

3. The matching method according to claim 1, wherein the personal information includes questionnaire answer information that is sent by the customer when the customer makes a business-talk appointment.

4. The matching method according to claim 1, wherein the personal information includes information that is obtained from business-talk recorded data.

5. The matching method according to claim 1, wherein the characteristic information includes analysis information about business-talk recorded data.

6. The matching method according to claim 1, wherein the characteristic information includes at least one of a score relevant to a past contract, product knowledge, and self-analysis information.

7. An information processing device (10) comprising a control unit (11) configured to:
acquire personal information about a customer;
acquire characteristic information about staff members;
determine compatibility between the customer and each staff member, based on the personal information and the characteristic information; and
decide a staff member that deals with the customer, based on a determination result.

8. The information processing device (10) according to claim 7, wherein the personal information includes information about at least one of a family structure, hobby, purchase intention, use purpose, living environment, and life event of the customer.

9. The information processing device (10) according to claim 7, wherein the personal information includes questionnaire answer information that is sent by the customer when the customer makes a business-talk appointment.

10. The information processing device (10) according to claim 7, wherein the personal information includes information that is obtained from business-talk recorded data.

11. The information processing device (10) according to claim 7, wherein the characteristic information includes analysis information about business-talk recorded data.

12. The information processing device (10) according to claim 7, wherein the characteristic information includes at least one of a score relevant to a past contract, product knowledge, and self-analysis information.

13. A non-transitory storage medium storing instructions that are executable by one or more processors and that cause the one or more processors to perform functions comprising:
acquiring (S20) personal information about a customer;
acquiring (S30) characteristic information about staff members;
determining (S40) compatibility between the customer and each staff member, based on the personal information and the characteristic information; and
deciding (S50) a staff member that deals with the customer, based on a determination result.

14. The non-transitory storage medium according to claim 13, wherein the personal information includes information about at least one of a family structure, hobby, purchase intention, use purpose, living environment, and life event of the customer.

15. The non-transitory storage medium according to claim 13, wherein the personal information includes questionnaire answer information that is sent by the customer when the customer makes a business-talk appointment.
